# EUROPEAN PATENT APPLICATION

(11) **EP 0 907 179 A1**
(43) Date of publication of application: **07.04.1999**
(21) Application number: 97117159.0
(22) Date of filing: 02.10.1997
(51) Int. Cl.: G11B 23/087

(54) **Belt driven recording tape cartridge**

(71) Applicant: VERBATIM CORPORATION, Charlotte, North Carolina 28262 (US)
(72) Inventor: Yoshiyama, Ryuichi, c/o Mitsubishi Chemical Corp., Yokohama-shi, Kanagawa 227 (JP); Kuriwada, Takeshi, c/o Mitsubishi Chemical Corp., Yokohama-shi, Kanagawa 227 (JP)
(74) Representative: Füchsle, Klaus, Dipl.-Ing.

(57) **Abstract**

A belt driven data recording tape cartridge includes tape packs in which ends of a data recording tape are respectively wound round a pair of tape reel hubs, guide members for determining a running path of the data recording tape, and a drive belt contiguous to the tape packs, whereby the data recording tape runs in a predetermined direction by running the drive belt. This cartridge uses the tape packs each having a different minimum diameter. With this construction, it is possible to provide the tape cartridge having a small difference between tape tensions due to the tape running direction, and exhibiting an excellent running stability and a low rate of error occurrence.

## Description

### BACKGROUND OF THE INVENTION

### Field of the Invention

The present invention relates generally to a data recording medium and, more particularly, to a belt driven tape cartridge suitable for recording data into a hard disk of computer with a high density as a backup. Related Background Art

A belt driven recording tape cartridge has hitherto been widely used for backing up the data in computer in terms of its having a versatility and a large storage capacity, and is disclosed in, e.g., U.S.P.3,692,255 and U.S.P.4,262,860.

This type of data tape cartridge typically includes a cartridge body consisting of a baseplate composed of a metal such as aluminum and an upper half portion composed of plastic such as polycarbonate, and is provided with a pair of tape packs wounded inside with recording tapes, and also rollers and pins that determine a running path of the tape. Herein, the tape pack is that a single tape reel hub is wounded with the tape.

Normally, an end part of the recording tape is provided with a non-recording part used for being wound on the tape reel hub and recorded with no data. A process for detecting a recording region end part (serving as a start part or an end part depending on a running direction of the data recording medium) of the tape, is effected between the non-recording part and a recording part. This process differs according to a detection method, and is exemplified such as perforating the tape in the case of an optical detection or previously recording a specific signal thereon in the case of a magnetic detection.

A driving belt (which may hereinafter simply be termed a "belt") driven in two directions by, normally, one two-way rotary motor is press-fitted to the tape pack, and, when the belt is driven, the tape runs by a frictional force between the belt and the tape.

The belt driven recording tape cartridge is constructed to run the tape by the frictional force between the belt and the tape, and hence there must be a difference between tape tensions due to the tape running directions depending on a layout of the tape packs. The tape tension controls a contact state between the head and the tape, and further influences recording/reproducing characteristics. Hence, it is desirable that the tape tension is fixed as much as possible. Especially in the belt driven recording tape cartridge as disclosed in U.S.P.4,262,860, because of the tape packs being not arranged in parallel to a front edge of the cartridge, the difference between the tape tensions due to the tape running directions to large, and an improvement thereof has hitherto been desired.

### SUMMARY OF THE INVENTION

It is a primary object of the present invention, which was contrived to obviate the problems described above, to provide a belt driven recording tape cartridge capable of reducing a difference between tape tensions due to a tape running direction by differentiating minimum diameters of two tape packs.

To accomplish this object, according to one aspect of the present invention, a belt driven tape cartridge comprises a first tape pack formed by winding an end of a data recording tape round a first tape reel hub, a second tape pack formed by winding the other end of the data recording tape round a second tape reel hub, a minimum diameters of the second tape pack is different from a minimum diameter of the first tape pack, guide members for determining a running path of the data recording tape, and a drive belt brought into contact with the tape packs, the drive belt running to run the data recording tape in a predetermined direction.

### BRIEF DESCRIPTION OF THE DRAWINGS

Other objects and advantages of the present invention will become apparent during the following discussion in conjunction with the accompanying drawings, in which:
FIG. 1 is a partially perspective schematic plan view of a data cartridge;
FIG. 2 is an explanatory view showing differences of tensions;
FIG. 3 is a diagram showing a case in which diameters of two tape reel hubs are set different; and
FIG. 4 is a diagram showing a case in which the diameters of the two tape reel hubs are set equal.

### DESCRIPTION OF THE PREFERRED EMBODIMENTS

The present invention will hereinafter be described in detail. Note that a minimum diameter of a tape pack according to the present invention implies an outside diameter of the tape pack in such a state that a tape reel hub is wound with only a part closer to an end than a beginning-of-tape (BOT) or an end-of-tape (EOT) of a recording region in a recording tape, i.e., is wound with only a part unused for recording data.

A method of differentiating the minimum diameters of the tape packs according to the present invention, may be arbitrary. For instance, there may be some methods of differentiating the outside diameters of the two tape reel hubs and of differentiating, at two ends, lengths of parts unused as recording regions of two ends of the tape in the longitudinal direction.

It is preferable that a ratio of the minimum diameters of the two tape packs described above is set within a range of 1/2 - 19/20 and, particularly, 3/5 - 9/10.

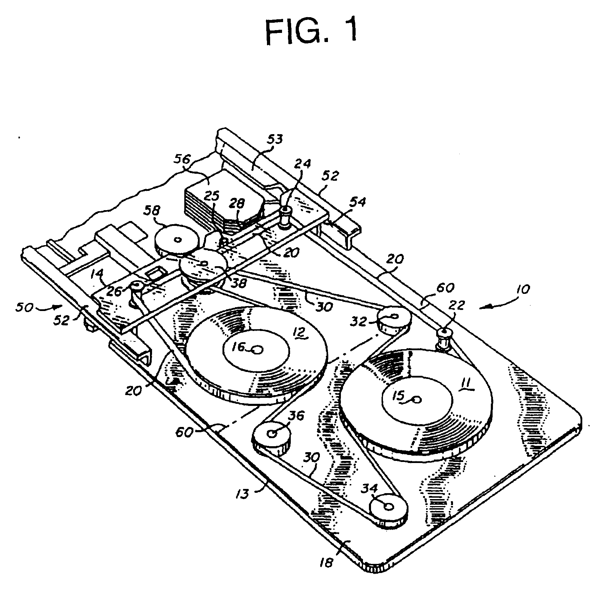

FIG. 1 is a perspective view illustrating a tape cartridge with some portions omitted in accordance with an embodiment of the present invention. FIG. 1 shows a state in which a tape cartridge 10 is loaded into a drive 50 from an aperture on the side of a front surface 14. The drive 50 is a device for recording or reproducing data. The drive 50 magnetically or optically records data to a recording tape 20. The data is magnetically recorded in this embodiment.

The tape cartridge 10 is provided with a pair of tape reel hubs 15, 16, the recording tape 20 of which two ends are wound round the pair of tape reel hubs 15, 16, guide pins 22, 24, 25, 26 for guiding the recording tape 20 along a predetermined running path, and a drive belt 30 with its internal surface movably supported by a plurality of drive belt guide rollers 32, 34, 36, 38 and with its external surface brought into contact with the recording tape 20 at all times in at least two positions.

The tape cartridge 10 is mainly provided with a baseplate 18 composed of a metal such as aluminum, the pair of tape reel hubs 15, 16 vertically erecting from the baseplate 18, the four pieces of recording tape guide pins 22, 24, 25, 26, the four pieces drive belt guide rollers 32, 34, 36, 38, and a housing 13 which covers the baseplate 18. Referring to FIG. 1, however, only a lower edge of the housing 13 is illustrated, while a illustration of an upper surface thereof is omitted.

The housing 13 is normally composed of plastic, and grooves are formed along edges of the unillustrated upper surface on both sides. When the tape cartridge 10 is loaded into the drive 50, L-shaped tracks 52 provided at both edges of the aperture of the drive 50 are fitted into the grooves formed at the edges of the unillustrated upper surface of the housing 13 on both sides,whereby the tape cartridge 10 is guided into the drive 50. In the case of the tape cartridge 10 having completely been loaded into the drive 50, an outer edge of the drive 50 comes to a position indicated by the numeral 60. Referring again to FIG. 1, however, the track 52 is shown with its some portions omitted from the midway together with the housing 13.

The pair of tape reel hubs 15, 16 have rotary shafts at centers thereof, and the two ends of the recording tape 20 are wounded on the tape reel hubs 15, 16, whereby tape packs 11, 12 are constructed. Rotational centers of the pair of tape reel hubs 15, 16 are different from each other in terms of distances from the front edge 14 of the tape cartridge 10 as well as in terms of distances from one side edge of the tape cartridge 10. Namely, the centers of the two tape reel hubs 15, 16 are positioned substantially along one diagonal line of the tape cartridge 10.

As a result, a recording capacity can be increased with enlargements of the tape packs 11, 12 by increasing the number of windings of the recording tapes 20 round the tape reel hubs 15, 16 while restraining a dimensional rise in the longitudinal direction without changing a wide dimension of the baseplate 18.

The recording tape guide pins 22, 24, 25, 26 are normally made of metal pins and function to guide the recording tape 20 along a predetermined running path. The running path of the recording tape 20 includes an edge (a front edge) 14 through which the tape cartridge 10 is inserted into the drive, and is arranged so that when the tape cartridge 10 is loaded into the drive 50, at the aperture of the front edge 14, the recording tape 20 comes into contact with a reproducing magnetic head 56 positioned in the drive 50 .

The four drive belt guide rollers 32, 34, 36, 38 are normally constructed of metallic guide pins and resinous rotating rolls positioned around them, and are arranged so as to determine the running path of the drive belt 30. That is, the internal surface of the drive belt 30 is movably supported by the plurality of drive belt guide rollers 32, 34, 36, 38, and the external surface thereof is always kept contact with the recording tape 20 at least two positions.

Then, one roller ("38" in the illustrative embodiment) among the four drive belt guide rollers is arranged at the front edge 14 of the tape cartridge 10, and functions as a drive roller. When the tape cartridge 10 is loaded into the drive 50, at the aperture of the front edge 14, the one roller 38 among the four drive belt guide rollers is brought into contact with a drive roller 58 arranged in the drive 50. Note that the numeral 28 in FIG. 1 represents a space between the recording tape 20 and the reproducing magnetic head 56, and the numeral 53 designates a movable door. This movable door 53 is closed so that the tape is not exposed when the cartridge is not yet inserted into the drive.

Having examined a tape tension produced when using the recording tape cartridge described above, it proved that the tape tension, when the recording tape runs, increases as it approaches the end of tape (EOT), and that an average value of the tape tensions is smaller in the case of running the tape from the tape pack 12 closer to the front edge (in a forward direction) toward the tape pack 11 remoter from the front edge than in the case of running the tape in the reverse direction.

The tape tension increases depending on an increase rate of the diameter of the winding tape pack and a decrease rate of the diameter of the sending tape pack. If the tape pack diameters are equalized, as stated above, the average value of the tension rises when running in the reverse direction. It is feasible to reduce a variation of the tension depending on the running direction by restraining the increase rate of the remote tape pack diameter, namely, by making the remoter tape pack larger.

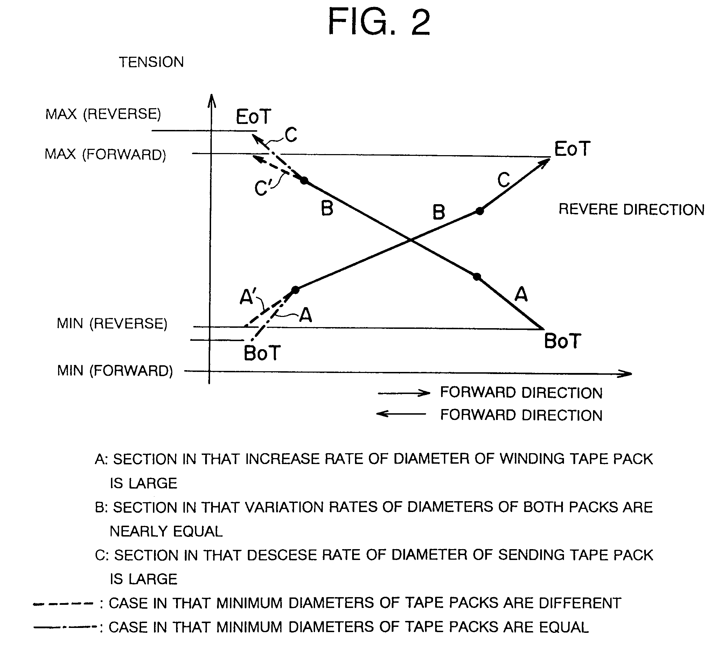

For instance, as shown in FIG. 2, the tension varies, when the minimum diameter of the remoter tape pack is made larger.

In the forward direction, when the minimum diameter of the winding tape pack is made larger, the tension at the beginning of winding becomes larger (A→A'). This may be a result of increase of a contact area between the belt and the tape pack. Further, an increase rate of the winding tape pack becomes small, so that the increase rate of the tension in a section indicated by A becomes small. Additionally, it is possible to disregard the variation of the maximum diameter of the winding tape pack caused by increasing the minimum diameter, therefor, in spite of increasing the minimum diameter, it is regarded that the tension does not vary in the C section.

In the reverse direction, there is no variation of the tension in the A and B sections in spite of increasing the minimum diameter. In the C section, however, the decrease rate of the sending tape pack becomes small, so that the tension increases gently and the maximum tension value becomes smaller (C→C').

Thus, an average tension incases in the forward direction and an average tension deceases in the reverse direction, so that a difference of the tension caused by running directions can be made smaller.

Further, a variation rate of the diameter becomes larger as the diameter gets smaller. Thus, the variation rate of the diameter can be controlled by differentiating the minimum diameters of the pair of tape packs. If the tension is high when running in the reverse direction as in this embodiment, the minimum diameter of the remoter tape pack becomes relatively larger than the minimum diameter of the closer tape pack, whereby a difference can be reduced.

Next, more specific examples of the present invention will hereinafter be described. The present invention is not, however, limited to the following examples without deviating from the gist of the invention.

### [Example 1]

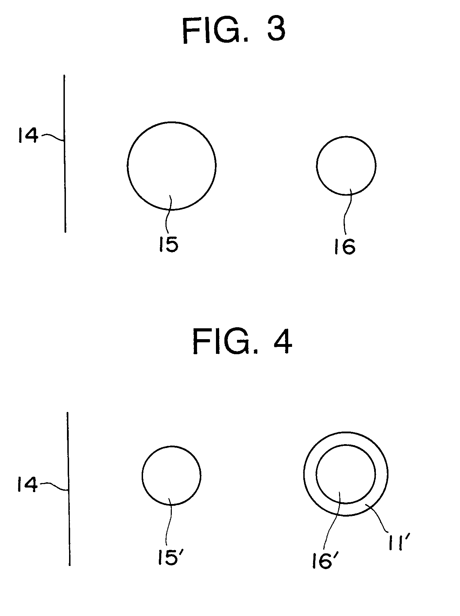

In the cartridge as shown in FIG. 1, an outside diameter of the tape reel hub 16 closer to the front edge of the cartridge is set to 15 mm, and an outside diameter of the tape reel hub 15 remoter therefrom is set to 21 mm as illustrated in FIG. 3. Then, the tape cartridge is manufactured, so that lengths of tape parts unused as recording regions at both ends in the tape running direction are equalized. An external dimension of the cartridge is 126 mm lengthwise, 81 mm crosswise, and 6.35 mm in tape width.

### [Example 2]

In the cartridge as shown in FIG. 1, the outside diameters of the two tape reel hubs 15, 16 are equally set to 15 mm as shown in FIG. 4. Further, the tape cartridge is manufactured so that the outside diameter of the tape pack becomes 15.1 mm by winding a tape part 11' unused as a recording region round the tape reel hub 15 closer to the front edge of the cartridge, and so that the outside diameter of the tape pack becomes 21 mm by winding the tape part 11' unused as the recording region round the tape reel hub 16 remoter from the front edge of the cartridge.

### [Comparative Example 1]

A tape cartridge is manufactured in the same manner as the embodiment 1 except for such an arrangement that the outside diameters of the two tape reel hubs are set to 15 mm.

### [Comparative Example 2]

A tape cartridge is manufactured in the same manner as the embodiment 1 except for such an arrangement that the outside diameters of the two tape real hubs are set to 21 mm.

Tensions in the cartridges of the examples 1, 2 and the comparative examples 1, 2 are measured by a mechanical tester made by Westlake Corp. A tape running velocity when measured is set to 90 in/sec.

Further, operations of writing the data once into the recording tape and reading the data twice therefrom, are consecutively executed for 60 hours, and an error occurrence condition in the written data is measured by use of a QIC cartridge drive made by Colorado Memory System Corp., whereby an error measurement is carried out. Then, the error occurrence condition is expressed by a number of errors per 1 mm in length in one track.

Table 1 shows a result of evaluation.

**Table 1**

| Average Tape Tension (ounce) Tape Running Direction | | | | Error Occurrence Condition (Number of Errors) | |
|---|---|---|---|---|---|
| | | | | Tape Running Direction | |
| | Forward | Reverse | (Diff.) | Forward | Reverse |
| Ex.1 | 1.64 | 1.66 | 0.03 | 0.13 | 0.11 |
| Ex.2 | 1.68 | 1.70 | 0.02 | 0.12 | 0.10 |
| Comp.Ex.1 | 1.51 | 1.83 | 0.32 | 2.51 | 0.77 |
| Comp.Ex.2 | 1.48 | 1.81 | 0.33 | 2.53 | 0.73 |
| 1 ounce = 28.35g | | | | | |

As obvious from Table 1 given above, the minimum diameters of the two tape packs when used are made different from each other, a difference between the tape tensions due to the tape running direction can be reduced, and stable recording/reproducing characteristics can be obtained.

Note that the present invention is not limited to the embodiments discussed above and may be carried out in other many aspects.

As apparent from the above discussion, according to the present invention, as to the belt driven magnetic tape cartridge, it is possible to reduce the difference between the tape tensions due to the tape running direction by differentiating the minimum diameters of the two tape packs when used and to obtain the stable recording/reproducing characteristics.

## Claims

1. A belt driven tape cartridge comprising:
a first tape pack formed by winding an end of a data recording tape round a first tape reel hub;
a second tape pack formed by winding other end of said data recording tape round a second tape reel hub, a minimum diameter of said second tape pack is different from a minimum diameter of said first tape pack;
guide members determining a running path of said data recording tape; and
a drive belt brought into contact with said tape packs, said drive belt running to run said data recording tape in a predetermined direction.

2. A belt driven tape cartridge according to claim 1, wherein said data recording tape is provided with non-recording regions unused for recording data at both ends, and diameters of said two tape packs, when said tape reel hubs are wound with said non-recording regions, are different from each other.

3. A belt driven tap cartridge according to claim 1, wherein diameters of said two tape reel hubs are different from each other.

4. A belt driven tape cartridge according to claim 1, wherein the diameter of said first tape pack is 1/2 through 19/20 of the diameter of said second tape pack.

5. A belt driven tape cartridge according to any one of claims 1 to 4, wherein said two tape reel hubs are arranged so that axes from a cartridge edge inserted into a recorder are different, and
a minimum diameter of said tape pack arranged closer to the cartridge edge is substantially smaller than that of said other tape pack.
